# EUROPEAN PATENT APPLICATION

(11) **EP 1 720 104 A1**
(43) Date of publication of application: **08.11.2006**
(21) Application number: 05447101.6
(22) Date of filing: 03.05.2005
(51) Int. Cl.: G06F 13/36, G06F 15/78

(54) **Integrated circuit comprising means for prioritizing traffic between modules**

(71) Applicant: Thomson Multimedia Broadband Belgium, 2650 Edegem (BE)
(72) Inventor: Duret, Xavier, 2660 Hoboken (BE)
(74) Representative: Kohrs, Martin

(57) **Abstract**

The present invention concerns an Integrated Circuit (100) comprising a plurality of source modules (1), (2), (3) with sending means to send source requests to other modules through a respective source module initiator interface (11), (21), (31) and a destination module (6) with receiving means to receive requests from other modules through a destination module target interface (62), an Interconnect module (5) comprising a plurality of interconnect target interface and interconnect initiator interface, said interconnect module switching one of its target interfaces (12), (22), (32) to its initiator interfaces (61). The Integrated Circuit (100) contains links between said source modules and the interconnect module, respectively between the source module initiator interfaces (11), (21), (31) and the interconnect target interfaces (12), (22), (32), and a link between the interconnect initiator interface (61) and the destination module target interface (62).

The Interconnect module comprises means for selecting a source request from a source module for transmission of an Interconnect request to the destination module as a function of the source request priority.

## Description

The present invention relates to communication system between modules on an Integrated Circuit (IC) and a method to prioritize traffic between modules.

An IC is usually composed of several modules that handle different functions. They are connected to interact with each other. Intellectual Property block (IP block) is an example of module that has a reusable design that can be provided by a third party. Standard connection between IP blocks permits to ease the assembling of several IP blocks into an IC. The designer can then include the IP block as such instead of having to design the interface.

A commonly used standard is the Virtual Component Interface (VCI). This is a specification referenced as "On-Chip Bus Development Working Group, Virtual Component Interface Standard, Version 2.0, (OCB 2 2.0)". It defines a protocol for the transfer of requests and responses through a unidirectional connection between two units, the initiator that sends the request and the target that responds. Unidirectional means that the initiator interface can only send requests and the target interface can only send responses. Module then exchange data across the VCI.

A module may contain several interfaces to connect to several modules. And two modules may be connected through several interfaces.

A module might send data to another module with different levels of priority. Anyway, a limitation of the VCI standard is that it does not provide any means to differentiate between several priorities. All traffic encapsulated into VCI requests and passing across the VCI is sent at the same priority.

The present invention ensures that high priority data transfer gets priority over low priority transfers on the IC.

The invention concerns an Integrated Circuit comprising a plurality of source modules with sending means to send source requests to other modules through a respective source module initiator interface, a destination module with receiving means to receive requests from other modules through a destination module target interface, and an Interconnect module comprising a plurality of interconnect target interface and interconnect initiator interface, said interconnect module switching one of its target interfaces to its initiator interfaces. The Integrated Circuit contains links between said source modules and the interconnect module, respectively between the source module initiator interfaces and the interconnect target interfaces, and a link between the interconnect initiator interface and the destination module target interface. The Interconnect module comprises means for selecting a source request from a source module for transmission of an Interconnect request to the destination module as a function of the source request priority.

According to an embodiment of the invention, the interconnect request priority is determined by a priority label associated with a source request. The information on the priority is attached to the requests the Interconnect receives. It can then interpret the label and transmit the request to the Destination module accordingly.

According to an embodiment of the invention, source modules associate a priority label to the requests they send to the Interconnect module. The priority label is set by the source module itself and has a constant value.

According to an embodiment of the invention, source modules dynamically set the value of the priority label they associates to the requests they send to the Interconnect module.

According to an embodiment of the invention, Interconnect is adapted to send interconnect requests to the destination module without the priority label. The information on priority is not required by the Destination module.

According to an embodiment of the invention, source modules contain a configurable priority tagging register that sets the value of the priority label. This permits to configure the priority on the module according to the traffic.

According to an embodiment of the invention, a module is appended to source modules that do not contain any priority tagging feature. This module contains a configurable priority tagging register that sets the value of the priority label. Then the third party source modules that are not accessible by the designer are made compliant with the other source devices.

According to an embodiment of the invention, source module is an Interconnect module. There might be several successive Interconnect modules between a source module and a destination module. The priority label is attached to the request until the interconnect module linked to the Destination module.

According to an embodiment of the invention, the Interconnect and the Destination module are connected through multiple links, the Interconnect is adapted to send interconnect requests to the destination module through said multiple links and each link is used for sending the interconnect requests corresponding to a specific set of priorities. This permits to optimize the transfer in case of heavy traffic between sources modules and destination modules.

The invention will be better understood and illustrated by means of the following embodiment and execution examples, in no way limitative, with reference to the appended figures on which:
- Figure 1 is a schematic diagram showing an integrated circuit 100 in the scope of the Virtual Component Interface (VCI) standard, which contains several modules: Source Module 1, Source Module 2, Source Module 3, a Destination Module 6 and an Interconnect 5.
- Figure 2 is a schematic diagram showing an integrated circuit 101 comprising two VCI trees: the Peripheral Virtual Component Interface (PVCI) configuration tree, and the Basic Virtual Component Interface (BVCI) data tree.
- Figure 3 is a representation of the priority tagged BVCl address.
- Figure 4 is a flow chart of the traffic between Source Modules and Destination modules.

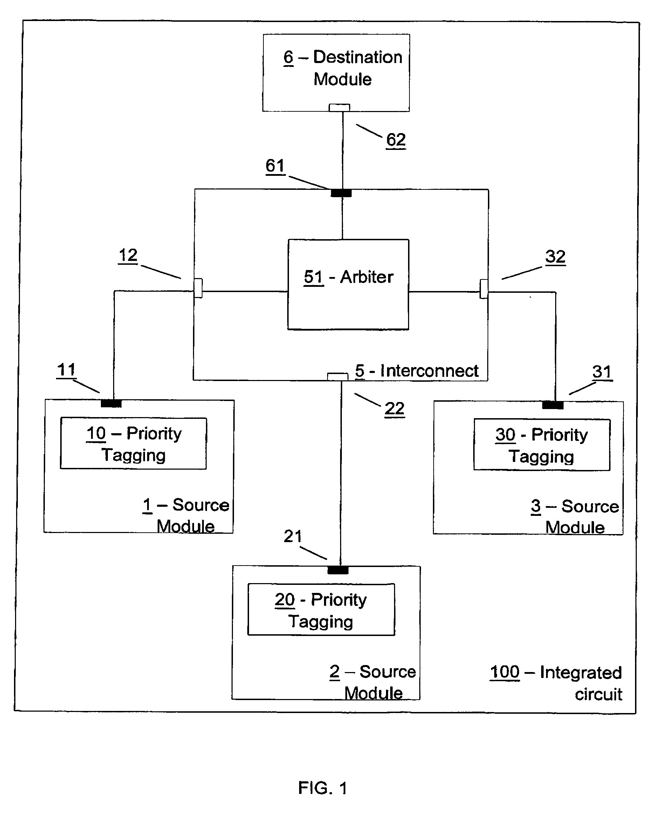

Figure 1 depicts an example of a circuit 100, in the scope of the Virtual Component Interface (VCI) standard, which contains several modules: Source Module 1, Source Module 2, Source Module 3, a Destination Module 6 and an Interconnect 5.

Source Module 1, Source Module 2 and Source Module 3 each have one initiator interface 11, 21 and 31. They are the sources of requests on the circuit.

Destination Module has a target interface 62. It is the destination of the requests on the circuit.

Interconnect has three target interfaces 12, 22, 33 and one initiator interface 61.

Modules are connected to each other through links respecting the VCI standard, which defines a unidirectional request-response protocol. This is a unidirectional protocol in the sense that on a link between two modules, the module that issues the request owns the initiator interface and the module that sends the response owns the target interface. The initiator interface can only send requests and the target interface can only send responses.

A module may contain several interfaces to connect to several modules. And two modules may be connected through several links.

The Interconnect module aims to switch one among its target interfaces to one of its initiator interfaces.

For example, in figure 1, Interconnect 5 switches three target interfaces 12, 22 & 32 to the initiator interface 61. This permits Source Module 1, Source Module 2 and Source Module 3 to access the unique interface of Destination Module 6. Without the Interconnect module, this would require three target interfaces on Destination Module 6.

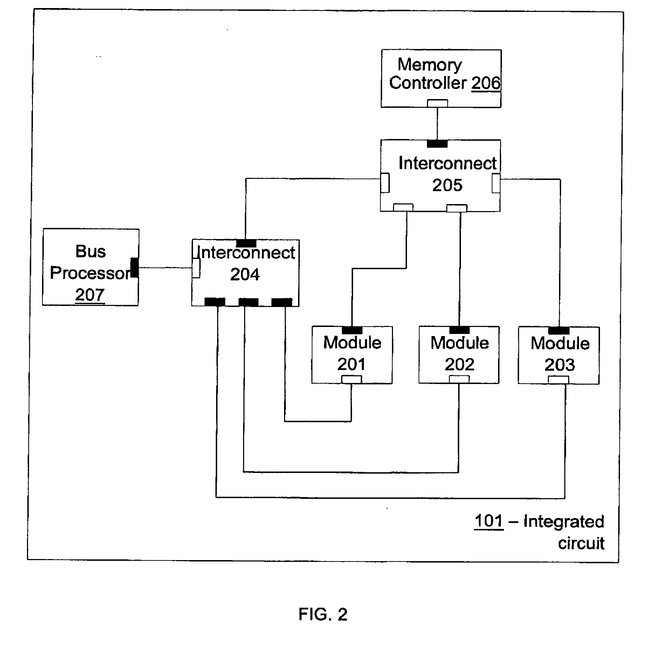

In figure 2, modules are connected with different types of VCI depending on the required complexity. The circuit 101 defines two VCI trees: the PVCI configuration tree, and the BVCl data tree.
- The BVCI data tree contains links between Memory Controller 206, Interconnect 205, Module 201, Module 202 and Module 203. The Memory Controller is connected to Interconnect 205, and Interconnect 205 is connected to Module 201, Module 202 and Module 203 through BVCI interfaces.
- The PVCI configuration tree contains a bus Processor 207, Interconnect 204, Module 201, Module 202 and Module 203. The Bus Processor is connected to Interconnect 204 and Interconnect 204 is connected to Module 201, Module 202 and Module 203 through PVCI interfaces.

On the PVCI tree, the bus processor 207 is the only source module. It has an initiator interface. Module 201, Module 202 and Module 203 are three destination modules. They have a target interface. On the path, Interconnect 204 has a target interface directed to the bus processor 207, and initiator interfaces towards Module 201, Module 202 and Module 203. Interconnect 204 forwards requests it receives from the bus Processor to Module 201, Module 202 or Module 203. What is presented in the invention is not applicable in this case, because there is not contention in the Interconnect for transmission of requests to the destination modules.

On the BVCI tree, Module 201, Module 202 and Module 203 are three source modules. They have an initiator interface. The Memory Controller 206 is the only destination module, it has a target interface. On the path, Interconnect 205 has an initiator interface towards the Memory Controller 206, and a respective target interface towards Module 201, Module 202 and Module 203. Interconnect 205 forwards requests it receives from Module 201, Module 202 or Module 203 to the Memory Controller 206.

In the VCI, there is no differentiation between requests; all requests have the same priority. The Interconnect 205 can not differentiate between three requests from Source Modules 201, Source Module 202 and Source Module 203. It may forward the requests to the Memory Controller 206 based on the time of arrival or on the initiator interface.

In figure 1, each Source module is an Ethernet Module that sends traffic with priority. Each Ethernet frame contains a user priority parameter as defined in IEEE 802.1 D, referenced as "IEEE 802.1 D - 2004, Media Access Control (MAC) bridges".

In order to prioritize the traffic on the VCI, the Priority Tagging entities 10, 20 & 30 of Source Modules 1, 2 & 3 append a priority tag in front of the most significant bits of the physical address of the request packet sent to the Interconnect.

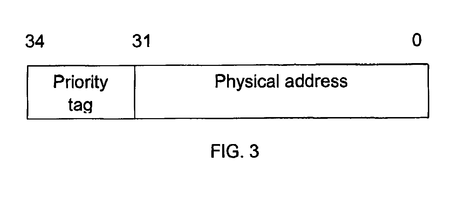

Figure 3 shows a VCI frame having 3-bit priority label. The priority tag may for example correspond to the user priority parameter as defined in IEEE 802.1 D. The Physical address, which is 32-bit long, corresponds to the BVCI physical address.

In the case of an Ethernet module, the priority tag that is appended to the Physical address may correspond to the user priority parameter of the Ethernet frame that is transported.

When receiving the tagged packet, the Arbiter 51 of the Interconnect 5 can order the emission of packets to the Destination Module 6 according to the priority tag attached to the packet.

The Arbiter strips the priority tag of the tagged address and then sends it to the Destination Module.

Arbitration of priority tagged VCI requests can be done in several manners by the Arbiter entity. For example, the algorithm can be strict priority, weighted round-robin.

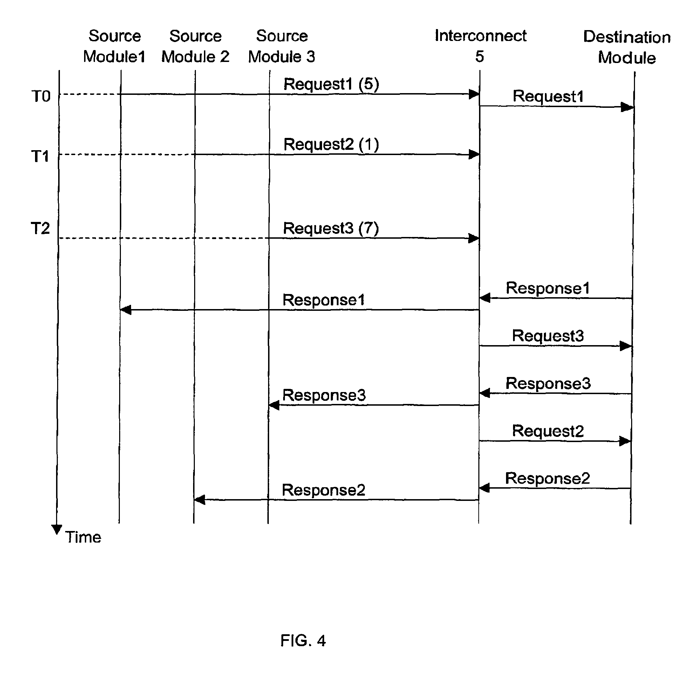

Figure 4 shows an example of the traffic flow performed in the BVCI configuration tree between Source Module 1, Source Module 2, Source Module 3 and the Destination Module 6 through Interconnect 5.

Source Module 1, Source Module 2 and Source Module 3 are connected to Interconnect 5, as indicated in figure 1. These three modules send packets to the Destination Module. They first send a request to Interconnect 5. Interconnect 5 maintains a list of all requests it receives and then forwards them successively to the Destination Module.

At T0, Source Module 1 sends request1 to Interconnect 5 to send packet1 with priority 5. At T1, Source Module 2 sends request2 to Interconnect 5 to send packet2 with priority 1. At T2, Source Module 3 sends request3 to Interconnect 5 to send packet3 with priority 7. T1 & T2 occur during the request ― response transaction between the Interconnect 5 and the Destination Module for the transfer of packet1. The transfer of packet1 is not interrupted to transmit the other incoming packets.

Packets coming from Source Modules are assigned a priority tag. Priority range is in increasing order from priority 0 to priority 7. Priority 7 is higher than priority 5 that is higher than priority 1.

Interconnect 5 arbitrates between all requests it receives.

During the transfer of packet 1, Interconnect 5 receives requests from Source Module 2 and Source Module 3. Source Module 2 sends a request with a priority inferior to the priority of the packet currently being transferred, packet 1, and also inferior to the priority of the request of Source Module 3. Moreover, Source Module 2 sends a request before Source Module 3.

The transfer of packet 1 with priority 5 is not interrupted to transmit the packet with priority 7 even though it has an inferior priority.

As soon as the transmission of packet 1 is complete, i.e. Interconnect 5 has received the response from the Destination Module, Interconnect 5 sends the packet that follows in the list to the Destination Module. Interconnect takes into account priority labels attached to the requests it receives from the Source Modules. It then always sends the request with the highest priority. This is due to the fact that the arbitration mechanism uses strict priority.

If all Source Modules use the priority tagging, arbitration is ensured in the Interconnect.

If a subset of Source Modules does not use the priority tagging, arbitration strategy is different in the Interconnect. It may then consider that packets without a priority tagging are assigned a certain constant level of priority. For example, if Source Module 3 would not use the priority tagging, the Interconnect would set the priority value for requests coming from Source Module 3 to priority 0.

The priority tagging may be designed though different strategies. VCI packets may always have the same priority or the priority may change per VCI packet or the priority may change per FiFo filling level.

The first case is for example applicable for a Source Module that has a voice decoder function. A register in the configuration memory map that is accessible from software is provided. The software is then able to set the priority on this interface. The priority tag is set to a constant value.

The second case is applicable for example to a Source Module being an Ethernet network interface. Frames may have different priorities: the priority tag may correspond to the Ethernet user priority parameter. The Source Module classifies its data and sends tagged VCI requests based on its classification.

The following example describes the third case. The source module contains a FiFo that can contain up to 255 elements. The source module sends Ethernet frames that do not contain any user priority parameter. The priority label attached to the VCI request offers 4 levels of priority from priority 0 to priority 3. The priority label depends on the filling rate of the FiFo. Between 0 and 63 elements on the FiFo, the tag is set to 0, between 64 and 127 elements on the FiFo, the tag is set to 1, between 128 and 191 elements on the FiFo, the tag is set to 2, between 192 and 255 elements on the FiFo, the tag is set to 3. This permits to avoid FiFo overflow.

In a design point of view, if a Source Module does not support priority tagging, it is possible to extend it by appending strapped bits to the desired fixed value.

An alternative is to use a configurable register in a specific module. This module contains a register that makes it configurable through a specific interface by the software. It can then append the priority tag to the address accordingly.

Another design might provide several links between the Interconnect module 5 and the Destination module 6, for example three links: link 1, link 2 and link 3. The Interconnect then has three Initiator interfaces and the Destination Module three Target interfaces. The Arbiter entity 51 may then adopt for example the following strategy. If the traffic to be sent from the Interconnect to the Destination module has 8 levels of priority, from priority 0 to priority 7, the interconnect may use link 1 for traffic having priority level from 0 to 3, link 2 for traffic having priority 4 and 5, and link 3 for traffic having priority 6 and 7.

Another design might provide several successive interconnect modules between the source module and the destination module. In that case the interconnect module that sends request to another interconnect module still appends the priority label to the request.

## Claims

1. Integrated Circuit (100) comprising:
- a plurality of source modules (1), (2), (3) with sending means to send source requests to other modules through a respective source module initiator interface (11), (21), (31);
- a destination module (6) with receiving means to receive requests from other modules through a destination module target interface (62);
- an Interconnect module (5) comprising a plurality of interconnect target interface and interconnect initiator interface, said interconnect module switching one of its target interfaces (12), (22), (32) to its initiator interfaces (61);
- links between said source modules and the interconnect module, respectively between the source module initiator interfaces (11), (21), (31) and the interconnect target interfaces (12), (22), (32);
- a link between the interconnect initiator interface (61) and the destination module target interface (62);
where the Interconnect module comprises means for selecting a source request from a source module for transmission of an Interconnect request to the destination module as a function of the source request priority.

2. Integrated Circuit according to claim 1, wherein said interconnect request priority is determined by a priority label associated with a source request.

3. Integrated Circuit according to claim 2, wherein said source modules associate a priority label to the requests they send to the Interconnect module.

4. Integrated Circuit according to claim 3, wherein said Interconnect is adapted to send Interconnect requests to the destination module without the priority label.

5. Integrated Circuit according to claim 4, wherein said source modules contain a configurable priority tagging register that sets the value of the priority label.

6. Integrated Circuit according to claim 4, comprising a module that is appended to source modules that do not contain any priority tagging feature and that contains a configurable priority tagging register that sets the value of the priority label.

7. Integrated Circuit according to claim 5, wherein said source module is an Interconnect module.

8. Integrated Circuit according to claim 5, wherein
- the Interconnect and the Destination module are connected through multiple links;
- the Interconnect is adapted to send interconnect requests to the destination module through said multiple links;
- each link is used for sending the interconnect requests corresponding to a specific set of priorities.
